# EUROPEAN PATENT APPLICATION

(11) **EP 1 865 725 A1**
(43) Date of publication of application: **12.12.2007**
(21) Application number: 06730031.9
(22) Date of filing: 27.03.2006
(51) Int. Cl.: H04N 7/173, H04N 7/26, H04N 5/445

(54) **MOBILE TERMINAL**

(30) Priority: 29.03.2005 JP 2005096536
(71) Applicant: NEC Corporation, Minato-ku Tokyo 108-8001 (JP)
(72) Inventor: KITATANI, Kenichi, Tokyo, 1088001 (JP)
(74) Representative: Heunemann, Dieter
(86) International application number: PCT/JP2006/306083
(87) International publication number: WO 2006/104071

(57) **Abstract**

A mobile terminal includes: a decoder configured to decode compressed motion picture data to thereby generate motion picture data; and a display configured to have a screen where a motion picture in accordance with the motion picture data is displayed. The decoder changes quality of the motion picture in accordance with a size of a region in the screen where the motion picture is displayed. For example, the decoder reduces the quality of the motion picture with a decrease in the size of the region described above. Here, the quality of the motion picture refers to the number of frames of the motion picture or the resolution of the motion picture. In this way, the power consumption of the mobile terminal is reduced.

## Description

### Technical Field

The present invention relates to a mobile terminal and more specifically to a mobile terminal having a function of reproducing a motion picture.

### Background Art

Digital television broadcasting services have been started in recent years, and television broadcasting services for mobile terminals, mainly mobile phones, are expected to start. Specifically, the ISDB-T standard is adopted in Japan while the DVB-H standard is adopted in Europe. Typically, to load a mobile terminal with a television receiving function, a TV tuner for supporting a broadcast system of a provided service and a decoder for supporting a motion picture compression format of television broadcast are required. For the mobile terminals, these TV tuner and decoder are components or functions that require large power consumption. An increase in the power consumption greatly limits a period during which television broadcast can be received continuously, and also shortens the battery life of the terminals. Therefore, there have been demands on the mobile terminals provided with a TV receiving function for a technology capable of reducing the power consumption. The DVB-H standard defines that a TV tuner loaded in a mobile terminal is intermittently operated in order to reduce the power consumption.

The following is known as typical technologies related to processing of a mobile terminal and a digital broadcast signal.

Japanese Laid-Open Patent Application JP-A 2001-45436 discloses a digital broadcast receiver. This digital broadcast receiver includes: an input section for inputting connection device information; a decoding section for decoding compressed and coded data; a detection section for detecting compression and coding conditions; a conversion section for converting the resolution of video data; a coding section for compressing and coding digital video data; a recording section for recording parameter data used in the conversion section and the coding section; and a parameter determination section for setting parameters used in the conversion section and the coding section based on the connection device information. The digital video data is converted into compressed and coded data with conditions appropriate for the display device and the connection device, and then recorded.

Japanese Laid-Open Patent Application JP-A-Heisei 09-65436 discloses a mobile terminal including a wireless communication function. This mobile terminal includes an image display section and a digitizer provided in this image display section. Further, this mobile terminal has a display direction change section for changing a display direction of an image displayed in the image display section.

Japanese Laid-Open Patent Application JP-A-Heisei 09-205630 discloses a television signal transmission and reception method. This method is to provide, upon receiving a digitally-coded video signal, the video signal with a resolution in accordance with a charge level desired by a user. A charge data included in stream is detected by a system decoder. Upon calculation performed at an inverse DCT calculation section configuring an MPEG2 video decoder, a decoding coefficient is controlled in accordance with user input.

Japanese Laid-Open Patent Application No. 2001-325054 discloses a multi-window display method of displaying a plurality of windows on one screen. When a first window moves and the first window and a second window are superimposed on each other, the first window is displayed in such a manner as to be superimposed inside the second window. Even when the second window moves or turns active, the positional relationship between these two windows does not change, thus displaying these windows.

### Disclosure of Invention

An object of the present invention is to provide a mobile terminal capable of reducing power consumption and a program executed in this mobile terminal.

Another object of the invention is to provide a mobile terminal capable of improving the battery life and a program executed in this mobile terminal.

In a first aspect of the present invention, a mobile terminal includes: a decoder configured to decode compressed motion picture data to thereby generate motion picture data; and a display configured to have a screen where a motion picture in accordance with the motion picture data is displayed. The decoder changes quality of the motion picture in accordance with a size of a region in the screen where the motion picture is displayed. For example, the decoder reduces the quality of the motion picture with a decrease in the size of the region described above. Here, the quality of the motion picture refers to the number of frames of the motion picture or the resolution of the motion picture.

The mobile terminal according to the present invention further includes a controller configured to control the decoder and the display. This controller executes a first application using the motion picture data. In addition, the controller, in accordance with instructions from the first application, receives the motion picture data from the decoder and displays on the display the motion picture in accordance with the received motion picture data.

In this mobile terminal, the controller may use the display in accordance with instructions from a second application different from the first application. In this case, the controller controls the display so as to reduce the size of the region described above, and also controls the decoder so as to reduce the quality of the motion picture.

Moreover, in this mobile terminal, a first length of the screen along a first direction is longer than a second length thereof along a second direction orthogonal to the first direction. In a first state, the controller controls the display so that a horizontal width of the motion picture matches with the first length. Moreover, in a second state, the controller controls the display so that the horizontal width of the motion picture matches with the second length. In this case, the controller controls the decoder so that the quality of the motion picture in the second state is lower than the quality of the motion picture in the first state.

Moreover, in this mobile terminal, the first application described above may be activated by a third application different from the first application. The size of the region described above is determined by the third application. In this case, the controller controls the decoder so as to provide the quality of the motion picture in accordance with the determined size.

In the present invention, it is preferable that the motion picture described above be a TV program. Thus, the mobile terminal according to the present invention further includes: an antenna configured to receive a TV broadcast wave; and a TV tuner configured to convert this TV broadcast wave into a data signal and then output the data signal as the compressed motion picture data to the decoder.

In a second aspect of the present invention, a program executed in the mobile terminal is provided. This mobile terminal includes a display and a computer which displays a motion picture on a screen of the display. This program causes the computer to execute steps: (A) determining a size of a region in the screen where the motion picture is displayed; and (B) changing quality of the motion picture in accordance with the size of this region. The step (B) described above includes a step of reducing the quality of the motion picture with a decrease in the size of the region described above.

### Brief Description of the Drawings

[FIG. 1] FIG. 1 is a block diagram showing a configuration of a mobile terminal according to the present invention.
[FIG. 2] FIG. 2 is a pattern diagram showing one example of a screen of the mobile terminal according to the present invention.
[FIG. 3] FIG. 3 is a pattern diagram showing a screen of the mobile terminal according to a first exemplary embodiment of the present invention.
[FIG. 4] FIG. 4 is a diagram showing an operation of the mobile terminal according to the first exemplary embodiment of the present invention.
[FIG. 5A] FIG. 5A is a pattern diagram showing one example of a screen of the mobile terminal according to a second exemplary embodiment of the present invention.
[FIG. 5B] FIG. 5B is a pattern diagram showing another example of the screen of the mobile terminal according to the second exemplary embodiment of the present invention.
[FIG. 6] FIG. 6 is a diagram showing an operation of the mobile terminal according to the second exemplary embodiment of the present invention.
[FIG. 7] FIG. 7 is a pattern diagram showing a screen of the mobile terminal according to a third exemplary embodiment of the present invention.
[FIG. 8] FIG. 8 is a diagram showing an operation of the mobile terminal according to the third exemplary embodiment of the present invention.

### Best Mode for Carrying out the Invention

Referring to the accompanying drawings, a mobile terminal according to the present invention and operation executed in this mobile terminal will be described. The mobile terminal according to the present invention is loaded with a motion picture reproduction function for displaying a motion picture on a display. This motion picture is exemplified by a TV (television) program. In the description below, configuration and operation of a mobile terminal provided with a television receiving function is used as an example.

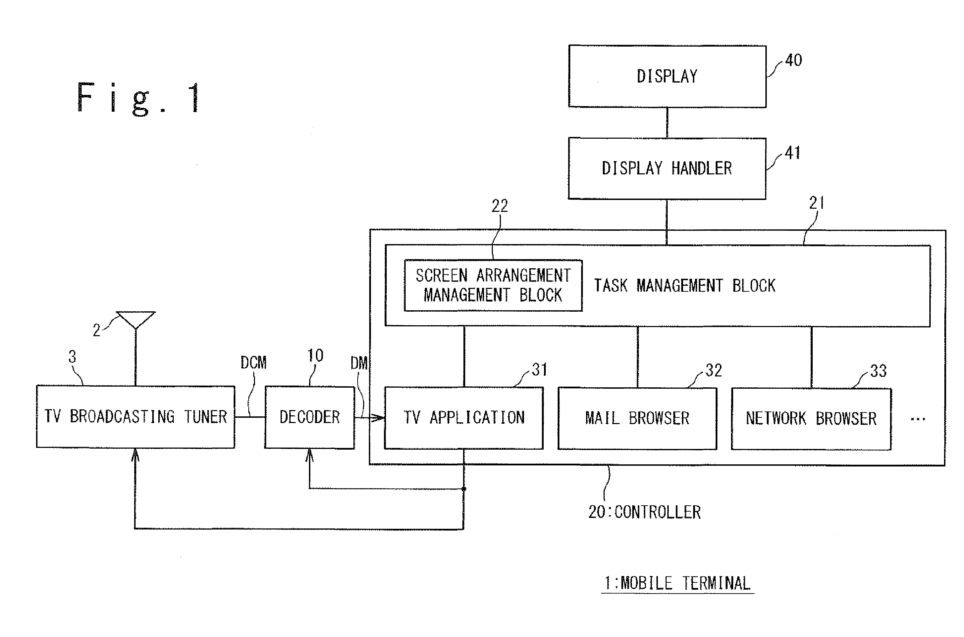

FIG. 1 is a block diagram showing a configuration of the mobile terminal according to the present invention. This mobile terminal 1 is provided with: an antenna 2; a TV broadcasting tuner 3; a decoder 10; a controller 20, a display 40, and a display handler 41.

The antenna 2 is an antenna for receiving a TV broadcast wave. The TV broadcasting tuner 3 converts the TV broadcast wave received by the antenna into a data signal. The data signal includes: compressed and coded motion picture data (hereinafter referred to as "compressed motion picture data DCM"), parameters of this motion picture data, program data, a code for error correction processing, and the like. The parameters of the motion picture data include a frame rate and a size of the motion picture. The TV broadcasting tuner 3 processes these data signals in accordance with a corresponding TV broadcast format. Then, the TV broadcasting tuner 3 outputs the compressed motion picture data DCM and the parameters of the motion picture data to the decoder 10.

The decoder 10 is a decoding processing section for decoding compressed and coded motion picture data. The decoder 10 receives the compressed motion picture data DCM and the parameters of the motion picture data from the TV broadcasting tuner 3. Then, the decoder 10, based on these parameters (frame rate, size, and the like) of the motion picture data, decodes the compressed motion picture data DCM to thereby generate motion picture data DM.

The controller 20 is a computer including a CPU and a RAM, and controls operation of the mobile terminal 1. Specifically, the controller 20 executes computer programs (software) such as OS, various applications, management programs, and the like. On the other hand, the controller 20 operates in accordance with instructions from these computer programs. Consequently, the controller 20 controls operations of the TV broadcasting tuner 3, the decoder 10, and the display handler 41 (display 40), and also provides various functions.

A task management block 21 and a screen arrangement management block 22 for providing predetermined functions are constructed in the controller 20 by management programs. The task management block 21 recognizes the application currently in operation and assigns a task to the application so that the resource does not run out. This permits the controller 20 to simultaneously execute a plurality of applications. An algorithm for the task assignment is designed in accordance with predetermined rules. The screen arrangement management block 22 is constructed in the task management block 21. This screen arrangement management block 22 determines screen arrangements (display position within the screen, display region, size of the display region, and the like) assigned to each application.

The applications executed by the controller 20 include: a TV application 31, a mail browser 32, a net browser 33, and the like.

The TV application 31 is an application for receiving and displaying TV broadcast by the mobile terminal 1, and uses the motion picture data DM described above. This TV application 31 is loaded on the mobile terminal 1 and activated by user operation. This TV application 31 controls the TV broadcasting tuner 3 and the decoder 10 in response to the user operation and instructions from the task management block 21 and the screen arrangement management block 22. Consequently, the TV broadcasting tuner 3 starts or ends the reception of TV broadcast, or matches the reception channel with a channel specified by the user. The decoder 10 changes quality of a motion picture (TV program) displayed on the screen.

The mail browser 32 is an application for transmitting and receiving mails by the mobile terminal 1. The mail browser 32 is loaded in the mobile terminal 1 and activated by user operation. The net browser 33 is an application for browsing web pages by the mobile terminal 1. The net browser 33 is loaded in the mobile terminal 1 and activated by user operation. These applications (31 to 33), when activated, are managed by the task management block 21. To these applications, tasks and display regions of the screen are assigned by the task management block 21 and the screen arrangement management block 22.

The display 40 is, for example, a liquid crystal display, and has a screen on which the applications and the like are displayed. The display handler 41, in response to instructions from the controller 20, controls a display of characters and motion pictures on the display 40. For example, the display handler 41, in accordance with the screen arrangements of each application determined by the screen arrangement management block 22 in the task management block 21, causes the display 40 to display the corresponding application.

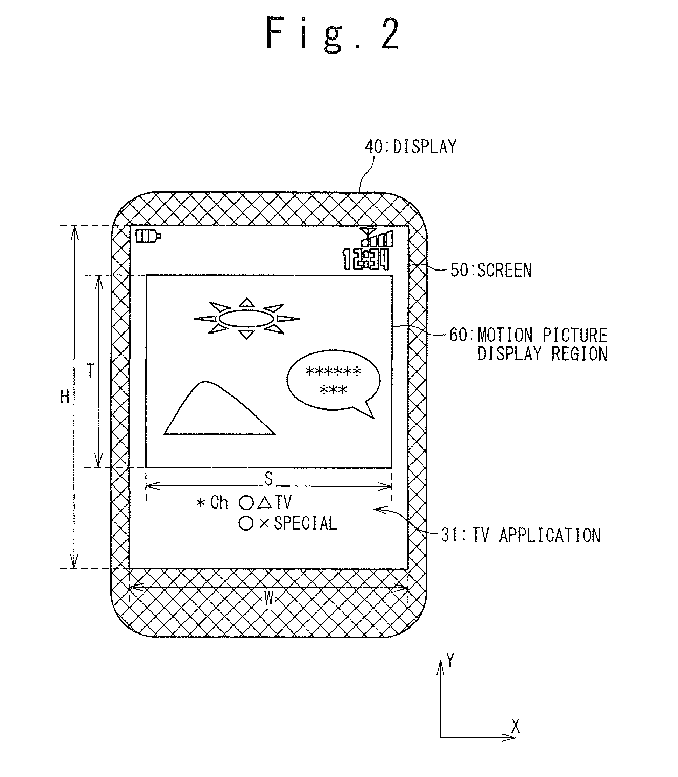

FIG. 2 is a pattern diagram showing one example of the screen of the mobile terminal 1 according to the present invention. As shown in FIG. 2, the display 40 has a screen 50, on which characters and motion pictures are displayed. The screen 50 has a shape of, for example, a rectangle. It is assumed that a width of the screen 50 along the X direction is W and that a width of the screen 50 along the Y direction is H. It is also assumed that, as shown in FIG. 2, the width W of the screen 50 is smaller than the width (height) H.

In addition, it is assumed in the example shown in FIG. 2 that the TV application 31 is being activated and that the entire screen of the screen 50 is assigned to this TV application 31. The TV application 31 (controller 20) receives the motion picture data DM from the decoder 10, and displays on the display 40 a motion picture (TV program) in accordance with this motion picture data DM. This motion picture is displayed in a "motion picture display region 60" of the screen 50. Here, it is assumed that a "horizontal width S" and a "vertical width T" are defined based on physical appearance of the motion picture. In the example shown in FIG. 2, the horizontal width S of the motion picture corresponds to the width of the motion picture display region 60 along the X direction, and the vertical width T of the motion picture corresponds to the width of the motion picture display region 60 along the Y direction. When the motion picture is displayed "horizontally", the horizontal width S of the motion picture corresponds to the width of the motion picture display region 60 along the Y direction, and the vertical width T of the motion picture corresponds to the width of the motion picture display region 60 along the X direction.

According to the present invention, the decoder 10 changes the quality of the motion picture in accordance with the size of this motion picture display region 60 (size of the motion picture). That is, in accordance with the size of the motion picture display region 60, the decoder 10 changes a decoding processing method (the number of frames processed per unit time and the decoding resolution of each frame). Specifically, with a decreasing size of the motion picture display region 60, the decoder 10 makes the decoding processing method simpler and reduces the quality of the motion picture. The quality of the motion picture includes a frame rate of the motion picture, resolution of the motion picture, and the like. Here, the decoder 10 simplifies the decoding processing method to an extent such that the user does not perceive the reduction in the motion picture. Therefore, the power consumption by the decoder 10 can be reduced without causing the user to perceive the reduction in the quality of the motion picture.

Hereinafter, operation (an operation program) of the mobile terminal 1 according to the present invention will be described further in detail.

### [First Exemplary Embodiment]

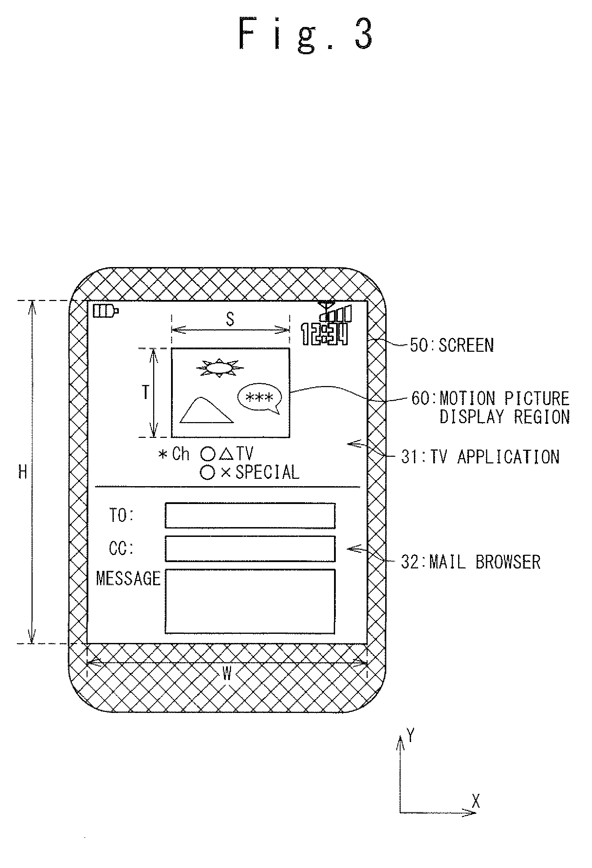

FIG. 3 is a pattern diagram showing a screen of the mobile terminal 1 according to a first exemplary embodiment of the present invention. In the present exemplary embodiment, other applications are used together with the TV application 31. For example, the TV application 31 and the mail browser 32 are used simultaneously. Therefore, the screen arrangements (display position within the screen, display region, size of the display region, and the like) are assigned to both the TV application 31 and the mail browser 32. As shown in FIG. 3, the screen 50 is divided into two regions, on which the TV application 31 and the mail browser 32 are respectively displayed. The region assigned to the TV application 31 includes the motion picture display region 60, on which a motion picture (TV program) in accordance with the motion picture data DM is displayed.

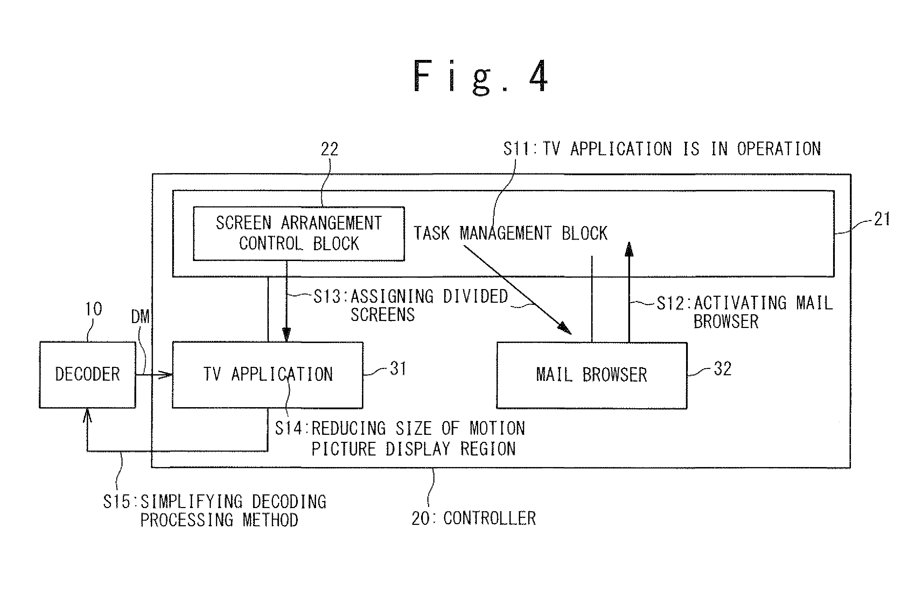

FIG. 4 is a diagram showing an operation of the mobile terminal 1 according to the present exemplary embodiment, more specifically, the operation of the mobile terminal 1 upon transition from a state shown in FIG. 2 to a state shown in FIG. 3. First, in the state shown in FIG. 2, only the TV application 31 is in operation. The task management block 21 manages the TV application 31, and the screen arrangement management block 22 assigns the entire screen of the screen 50 to the TV application 31 (step S11)*.* The decoder 10 creates the motion picture data DM by a predetermined decoding method, and the motion picture (TV program) is displayed on the motion picture display region 60 with a predetermined frame rate and resolution.

Next, the user activates the mail browser 32 (step S12). The task management block 21 manages the TV application 31 and the mail browser 32 in accordance with previously designed rules. This mail browser 32 uses the screen 50 of the display 40. Therefore, the screen arrangement management block 22 divides the screen 50 into two regions and assigns these regions to the TV application 31 and the mail browser 32, respectively (step S13).

The region of the screen 50 assigned to the TV. application 31 is smaller than that in the state shown in FIG. 2. Therefore, the motion picture display region 60 relative to the screen 50 (size of the motion picture) needs to be reduced. The TV application 31, in accordance with the screen arrangements assigned by the screen arrangement management block 22, reduces the size of the motion picture display region 60 relative to the screen 50 (step S14). The display 40 (display handler 41) reduces the size of the motion picture display region 60.

The TV application 31 also controls the decoder 10 so as to simplify the decoding processing method (step S15) . The decoder 10 simplifies the decoding processing method to an extent such that the user does not perceive reduction in the motion picture. The simplification of the decoding processing is achieved by, for example, reducing the number of frames processed per unit time or reducing resolution of each frame. That is, the number of processed frames and the frame resolution are determined in accordance with the size of the motion picture display region 60. The reduction in the size of the motion picture display region 60 results in reduction in quality of the motion picture.

In this manner, when the state of the mobile terminal 1 has changed, the controller 20 determines the dimension (size) of the motion picture display region 60 of the screen 50 where the motion picture is displayed. If the determined size is smaller than before, the controller 20 controls the display 40 so as to reduce the size of the motion picture display region 60. The controller 20 also controls the decoder 10 so as to reduce the quality of the motion picture.

When the size of the motion picture displayed on the screen 50 has been reduced, even if the quality of the motion picture has reduced to some extent in the decoding processing, the user cannot recognize this image quality reduction on the screen. Therefore, when the size of the motion picture has been reduced, it is meaningless to make the best use of a processing capability of the decoder 10. According to the present invention, when the size of the motion picture display region 60 has been reduced, the TV application 31 automatically changes contents of processing by the decoder 10, and intentionally reduces the number of processed frames and the frame resolution. This consequently prevents meaninglessly bringing out the processing capability of the decoder 10. That is, a meaningless increase in the power consumption by the decoding processing can be prevented, while the power consumption is reduced. Accordingly, a battery life of the mobile terminal 1 is prolonged.

### [Second Exemplary Embodiment]

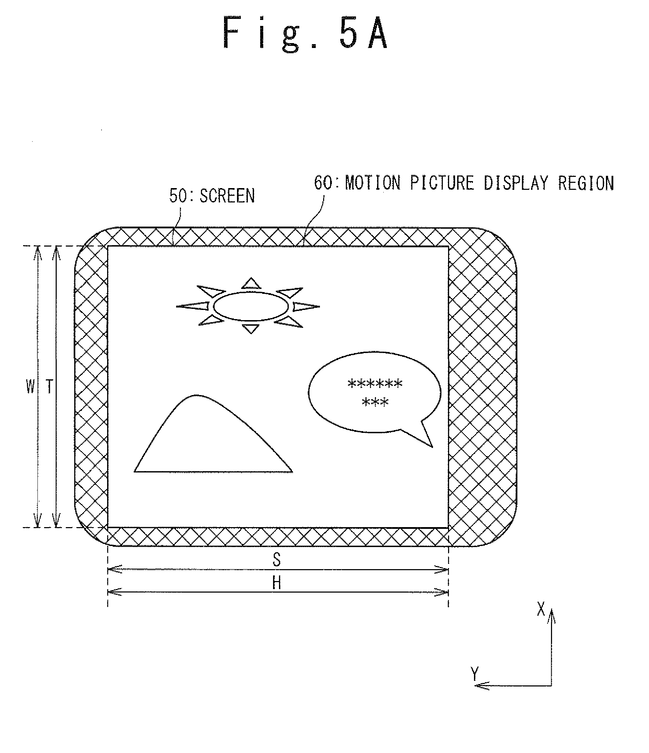

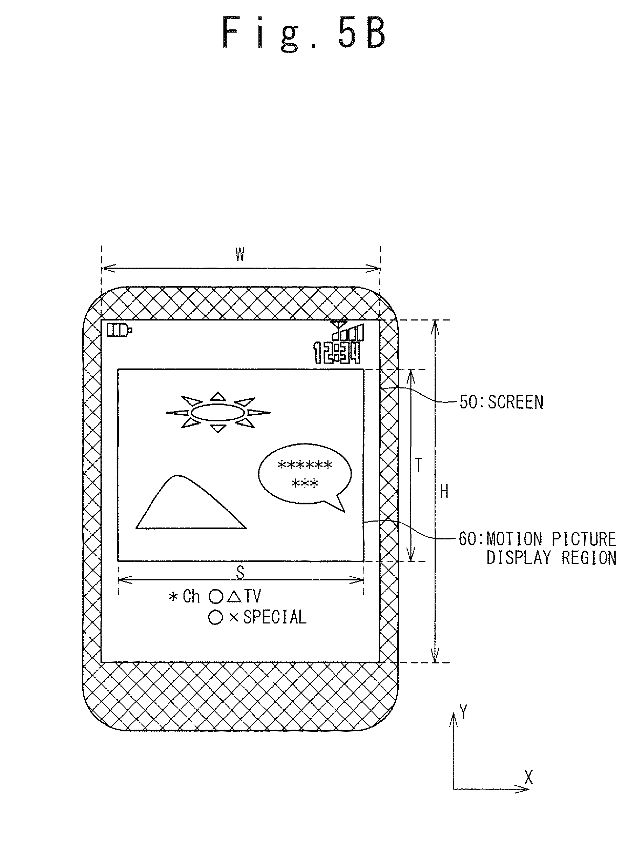

FIGS. 5A and 5B are pattern diagrams showing a screen of the mobile terminal 1 according to a second exemplary embodiment of the present invention. In the present exemplary embodiment, it is assumed that the TV application 31 is being activated and the entire screen of the screen 50 is assigned to the TV application 31. This TV application 31 has a function of displaying characters and a motion picture in the screen in accordance with a direction of the mobile terminal 1. That is, it is assumed that there are two possible methods (directions) for displaying the motion picture ("horizontal direction" and "vertical direction") and that these two display methods can be switched by user specification. It is also assumed that, in these two display methods, the vertical to horizontal ratio (T:S) of the motion picture is fixed.

FIG. 5A shows a state of the motion picture displayed by a first display method (horizontally). In this case, the motion picture display region 60 extends all over the screen 50, and a horizontal width S of the motion picture matches with a width (height) H of the screen 50 along the Y direction. A vertical width T of the motion picture matches with a width W of the screen 50 along the X direction. Here, "matching" between the two lengths means that these two lengths are substantially equal to each other. On the other hand, FIG. 5B shows a state of the motion picture displayed by the second display method (vertically). In this case, the motion picture display region 60 is only part of the screen 50, and the horizontal width S of the motion picture matches with the width W of the screen 50 along the X direction. That is, in the first display method, the controller 20 controls the display 40 so that the horizontal width S of the motion picture matches with the height H of the screen 50. On the other hand, in the second display method, the controller 20 controls the display 40 so that the horizontal width S of the motion picture matches with the width W of the screen 50. The width H of the screen 50 is longer than the width W thereof; thus, the horizontal width S of the motion picture in FIG. 5A is wider than the horizontal width S of the motion picture in FIG. 5B. Since the vertical to horizontal ratio (T:S) of the motion picture is maintained, a size of the motion picture display region 60 in FIG. 5B is smaller than a size of the motion picture display region 60 in FIG. 5A.

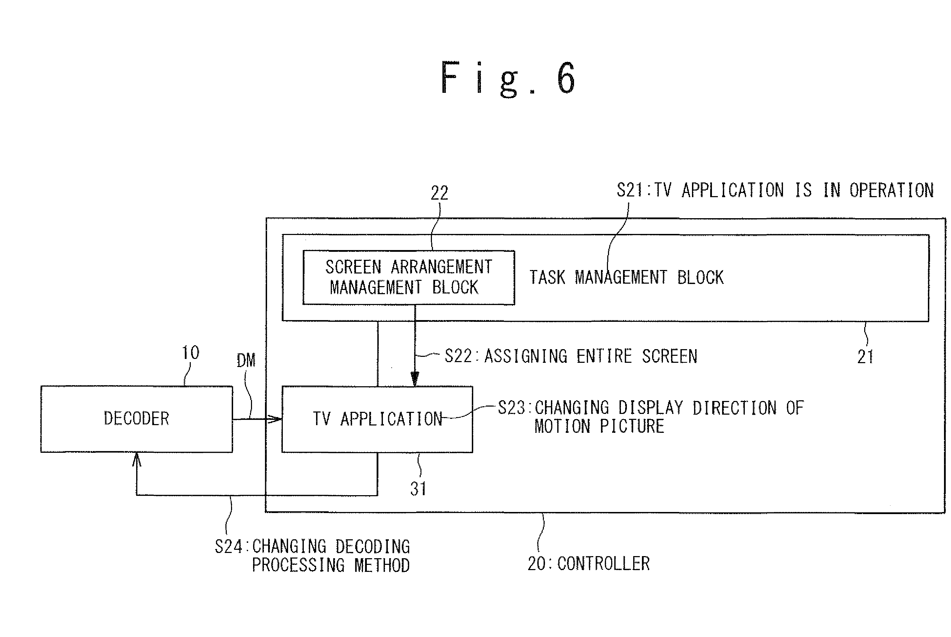

FIG. 6 is a diagram showing an operation of the mobile terminal 1 according to the present exemplary embodiment. More specifically, FIG. 6 shows an operation of the mobile terminal 1 upon transition from the state shown in FIG. 5A to the state shown in FIG. 5B. First, in the state shown in FIG. 5A, the TV application 31 is in operation, and the task management block 21 is managing the TV application 31 (step S21). The screen arrangement management block 22 assigns the entire screen of the screen 50 to the TV application 31 (step S22). The decoder 10 creates motion picture data DM by a predetermined decoding method. A motion picture (TV program) is displayed on the motion picture display region 60 shown in FIG. 5A with a predetermined frame rate and resolution.

Next, the user gives instructions for changing the display method (direction) of the motion picture. In response to the instructions from the user, the TV application 31 changes the display of the motion picture from the state shown in FIG. 5A to the state shown in FIG. 5B (step S23). That is, the TV application 31 reduces the size of the motion picture display region 60, and the display 40 (display handler 41) reduces the size of the motion picture display region 60 accordingly.

The TV application 31 controls the decoder 10 so as to simplify the decoding processing method (step S24). The decoder 10 simplifies the decoding processing method to an extent such that the user does not perceive reduction in the motion picture. The simplification of the decoding processing is achieved by, for example, reducing the number of frames processed per unit time or reducing the resolution of each frame. The simplification of the decoding processing reduces quality of the motion picture.

On the contrary, upon transition from the state shown in FIG. 5B to the state shown in FIG. 5A, the TV application 31 enlarges the size of the motion picture display region 60 in response to user instructions (step S23). The display 40 (display handler 41) enlarges the size of the motion picture display region 60 accordingly. Moreover, the TV application 31 controls the decoder 10 so that the decoding processing is performed by normal processing capability (step S24).

In this manner, when the state of the mobile terminal 1 has changed, the controller 20 determines the dimension (size) of the motion picture display region 60 of the screen 50 where the motion picture is displayed. If the determined size is smaller than before, the controller 20 controls the display 40 so as to reduce the size of the motion picture display region 60. Moreover, the controller 20 controls the decoder 10 so as to reduce the quality of the motion picture.

When the size of the motion picture displayed on the screen 50 has been reduced, even if the quality of the motion picture reduces to some extent in the decoding processing, the user cannot recognize this image quality reduction on the screen. Therefore, when the size of the motion picture has been reduced, it is meaningless to make the best use of a processing capability of the decoder 10. According to the present invention, when the size of the motion picture display region 60 has been reduced, the TV application 31 automatically changes contents of processing performed by the decoder 10 and intentionally reduces the number of frames and the frame resolution. This consequently prevents meaninglessly bringing out the processing capability of the decoder 10. That is, a meaningless increase in the power consumption by the decoding processing is prevented, while the power consumption is reduced. Accordingly, the battery life of the mobile terminal 1 is prolonged.

### [Third Exemplary embodiment]

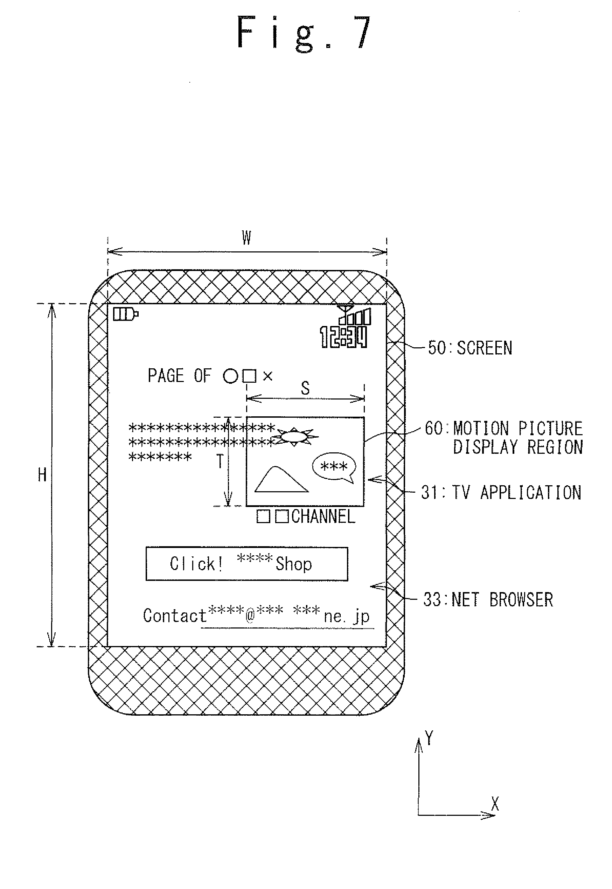

FIG. 7 is a pattern diagram showing a screen of the mobile terminal 1 according to a third exemplary embodiment of the present invention. In the present exemplary embodiment, the TV application 31 is activated by another application. For example, the TV application 31 is activated by the net browser 33. More specifically, the mobile terminal 1 according to the present exemplary embodiment has an Internet connection function. The net browser 33 has a function of interpreting a tag for viewing a TV program and displaying a motion picture reproduced by the TV application 31. In this case, the motion picture is displayed within the browser screen, and the size of the motion picture display region 60 is determined by contents interpreted by the net browser 33. Then, in the motion picture display region 60 with a size determined by the net browser 33, a motion picture in accordance with motion picture data DM is displayed.

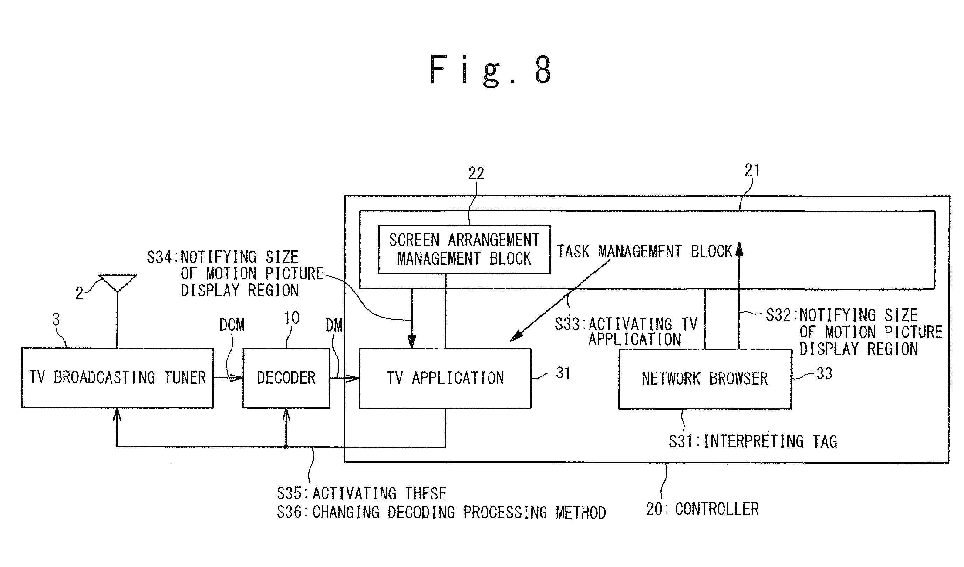

FIG. 8 is a diagram showing an operation of the mobile terminal according to the third exemplary embodiment of the present invention. First, the net browser 33 is in operation. The task management block 21 manages the net browser 33, and the screen arrangement management block 22 assigns the entire screen of the screen 50 to the net browser 33. In this condition, the net browser 33 interprets a tag, which is included in the net contents, for viewing a TV program (step S31).

At this point of time, the net browser 33, in accordance with the net contents, determines the size of the motion picture display region 60 of the browser screen where the motion picture (TV program) is displayed. Then, the net browser 33 notifies the size of the motion picture display region 60 to the task management block 21 (step S32). The task management block 21 activates the TV application 31 and manages the TV application 31 in cooperation with the net browser 33 (step S33). Moreover, the screen arrangement management block 22 notifies the size of the motion picture display region 60 described above to the activated TV application 31 (step S34).

The activated TV application 31 activates the TV broadcasting tuner 3 and the decoder 10 in order to receive the TV program and use the motion picture data DM (step S35). Moreover, the TV application 31 controls the decoder 10 so as to provide quality of the motion picture in accordance with the notified size of the motion picture display region 60. That is, the TV application 31 controls the decoder 10 so that the quality of the motion picture reduces with a decrease in the notified size of the motion picture display region 60 (step S36). To reduce the quality of the motion picture, the decoder 10 simplifies the decoding processing method to an extent such that the user does not perceive the reduction in the motion picture. The simplification of the decoding processing is achieved by, for example, reducing the number of frames processed per unit time or reducing the resolution of each frame.

In this manner, when a state of the mobile terminal 1 has changed, the controller 20 determines the dimension (size) of the motion picture display region 60 of the screen 50 where the motion picture is displayed. Moreover, the controller 20, in accordance with the determined size, controls the decoder 10 so as to reduce the quality of the motion picture.

When the size of the motion picture displayed on the screen 50 is small, even if the quality of the motion picture reduces to some extent in the decoding processing, the user cannot recognize this image quality reduction on the screen. Therefore, when the size of the motion picture is small, it is meaningless to make the best use of a processing capability of the decoder 10. According to the present invention, in accordance with the size of the motion picture display region 60, the TV application 31 automatically changes contents of processing by the decoder 10 and intentionally reduces the number of processed frames and the frame resolution. This consequently prevents meaninglessly bringing out the processing capability of the decoder 10. That is, a meaningless increase in the power consumption by the decoding processing can be prevented, while the power consumption is reduced. Accordingly, the battery life of the mobile terminal 1 is prolonged.

With the mobile terminal according to the present invention and a program executed in this mobile terminal, the power consumption by the decoding processing is reduced, thus prolonging the battery life of the mobile terminal.

## Claims

1. A mobile terminal comprising:
a decoder configured to decode compressed motion picture data to thereby generate motion picture data; and
a display configured to have a screen where a motion picture in accordance with said motion picture data is displayed,
wherein said decoder changes quality of said motion picture in accordance with a size of a region in said screen where said motion picture is displayed.

2. The mobile terminal according to claim 1, wherein said decoder reduces said quality of said motion picture with a decrease in said size of said region.

3. The mobile terminal according to claim 2, wherein said quality of said motion picture refers to the number of frames of said motion picture.

4. The mobile terminal according to claim 2, wherein said quality of said motion picture refers to resolution of said motion picture.

5. The mobile terminal according to any of claims 2 to 4, further comprising:
a controller configured to control said decoder and said display,
wherein said controller executes a first application using said motion picture data, and
wherein said controller, in accordance with instructions from said first application, receives said motion picture data from said decoder and displays on said display said motion picture in accordance with said received motion picture data.

6. The mobile terminal according to claim 5, wherein, when said controller uses said display in accordance with instructions from a second application different from said first application, said controller controls said display so as to reduce said size of said region, and controls said decoder so as to reduce said quality of said motion picture.

7. The mobile terminal according to claim 5, wherein a first length of said screen along a first direction is longer than a second length thereof along a second direction orthogonal to said first direction,
wherein said controller controls said display so that a horizontal width of said motion picture matches with said first length in a first state,
wherein said controller controls said display so that said horizontal width of said motion picture matches with said second length in a second state, and
wherein said controller controls said decoder so that said quality of said motion picture in said second state is lower than said quality of said motion picture in said first state.

8. The mobile terminal according to claim 5, wherein said first application is activated by a third application different from said first application,
wherein said size of said region is determined by said third application, and
wherein said controller controls said decoder so as to provide said quality of said motion picture in accordance with said determined size.

9. The mobile terminal according to any of claims 1 to 8, wherein said motion picture is a TV program.

10. The mobile terminal according to claim 9, further comprising:
an antenna configured to receive a TV broadcast wave; and
a TV tuner configured to convert said TV broadcast wave into a data signal and output said data signal as said compressed motion picture data to said decoder.

11. A method of reproducing a motion picture, comprising:
providing a mobile terminal which includes a display with a screen on which a motion picture in accordance with motion picture data is displayed;
determining a size of a region in said screen where said motion picture is displayed; and
reproducing said motion picture data on said screen based on quality specified in accordance with said determined size by decoding compressed motion picture data.

12. The method of reproducing a motion picture according to claim 11, wherein said reproducing step includes:
reducing quality of said motion picture with a decrease in said size of said region.

13. The method of reproducing a motion picture according to claim 12, wherein said quality of said motion picture refers to the number of frames of said motion picture.

14. The method of reproducing a motion picture according to claim 12, wherein said quality of said motion picture refers to resolution of said motion picture.

15. The method of reproducing a motion picture according to any of claims 12 to 14, further comprising:
executing a first application using said motion picture data,
wherein said reproducing step includes:
reproducing said motion picture in accordance with said motion picture data, in accordance with instructions from said first application.

16. The method of reproducing a motion picture according to claim 15, wherein a first length of said screen along a first direction is longer than a second length thereof along a second direction orthogonal to said first direction,
wherein said determining step includes:
determining said region so that a horizontal width of said motion picture matches with said first length in a first state, and
determining said region so that said horizontal width of said motion picture matches with said second length in a second state,
wherein said reproducing step includes:
reproducing said motion picture data so that said quality of said motion picture in said second state is lower than said quality of said motion picture in said first state.
